# EUROPEAN PATENT APPLICATION

(11) **EP 3 804 826 A1**
(43) Date of publication of application: **14.04.2021**
(21) Application number: 18919736.1
(22) Date of filing: 24.05.2018
(51) Int. Cl.: A63F 13/65, G09B 9/00, A47C 3/025, A47C 7/62

(54) **VIRTUAL SIMULATION DEVICE**

(71) Applicant: P&I COMPANY, Jeju-do 63309 (KR)
(72) Inventor: SHIN, Jae Jung, Jeju-si, Jeju-do 63309 (KR); YOUN, Eun Seok, Seoul 08625 (KR)
(74) Representative: dompatent von Kreisler Selting Werner - Partnerschaft von Patent- und Rechtsanwälten mbB
(86) International application number: PCT/KR2018/005873
(87) International publication number: WO 2019/225782

(57) **Abstract**

The present invention relates to a virtual simulation device in which: a base (10) and an upper frame (20) are hinge-connected by a front support frame (31) and a rear support frame (32) so as to have a generally trapezoidal shape; a seat plate(40) that rotates about a rotary shaft (41) is mounted on the upper side of the upper frame (20) and a chair is mounted on the upper side of the seat plate (40); a front and rear oscillating cam motor and a front and rear oscillating link (13) for oscillating the front and rear support frames forward and rearward are mounted on the base (10); and a left and right rotating cam motor and a left and right rotating link (23) for rotating the seat plate (40) are mounted on the upper frame (20).

## Description

### [Technical Field]

The present invention relates to avirtual simulation device, and more particularly to a a virtual simulation device which has a simple configuration and allows a chair for a user to move as in a real situation so that the user may experience a feeling close to reality.

### [Background Art]

As is well known, electronic games using programs have been widely used mainly by children and adolescents for a long time, and recently, expansion of spread of high-speed Internet together with developed PCs causes rapid activation of on-line gaming, and thus, it is no exaggeration to say that on-line games have become a universal cultural element thatcan be simply enjoyed by anyone regardless of age or sex.

On that basis, the game industry has rapidly progressed, and various kinds of games, i.e., from simple puzzles to various combat games or sports games and motorcycle games or car-race games, cover a wide variety of fields, and thus, users may select and enjoy games suitable for their tastes.

However, in case of these games, a user generally operates manipulating units, such as a joystick or a keyboard and a mouse, with both hands while watching a screen in the state in which the user sits on a chair provided in front of a PC or a game console, and merely enjoys a game while visually perceiving the situation of the game.

Meanwhile, in the case of a car race game installed in a large-scale offline game room, a manipulating device for vehicles is provided so that a user may feel as if the user were actually driving a vehicle, but it is not sufficient to convey a sense of realism.

That is, the user may execute all actions, such as starting and acceleration of a vehicle, changing the direction of the vehicle, and stopping the vehicle, similar to actual driving of a vehicle, but the user merely uses hands and feet in a stationary state, in which the user sits on a chair, and thus cannot feel the experience of actually being a player in the game, such as inertia in which the user's body is pushed slightly rearwards or forwards when the user starts or stops the vehicle, or a phenomenon in which the user's body changes the direction thereof like a player in a game when the user changes the direction of the vehicle.

A simulation device is developed in order to produce a more realistic game so that a user may feel a realistic situation, and the simulation device virtually produces situations which may actually occur through a computer program and thus provides an indirect experience to the user, thus being capable of being applied to driver training and games of vehicles, airplanes, motorcycles, etc.

That is, virtual three-dimensional situations are programmed, and three-dimensional motion is provided by the simulation device, so that the user feels motion like that of a real situation, and this effect is applied to various situations so that the user experiences a realistic virtual situation.

This simulation device may be applied to various games, or be applied to various fields, such as various experiences, education and watching of three-dimensional movies through simulation.

Further, the above-described simulation device is graphed onto a virtual reality device due to the characteristics of the simulation device which allow users to feel a three-dimensional sense, thereby being capable of creating greater synergistic effects.

In general, the virtual reality device generates an image and a sound through a head mounted display (HMD) provided with a monitor and a speaker and drives a chair, thereby providing virtual reality to a user.

That is, the virtual reality device reproduces a dynamic change appropriate to a virtual environment through sensing devices, such as the HMD and the chair, controlled by a computer, so that the user experiences virtual reality, and thus has widely spread in game rooms and three-dimensional movie theaters.

In order to more realistically convey a feeling exchange from a virtual environment reproduced by a computer to a user in the virtual reality device, it is necessary to animatedly reproduce a dynamic change by variously driving the chair of the user.

That is, the chair is oscillated and rotated in three-dimensional directions so as to provide a sense of realism to the user, and for this purpose, the above-described simulation device is applied.

As such, the simulation device is used not only as a game or educational device using a general monitor but also as a device which allows a user to experience a realistic situation in virtual reality, and conventionally, a device configured to drive a chair used by a user for simulation is very complicated and thus expensive, and the simulation device occupies a great volume of space and is thus inefficient, and moreover, the simulation device is limitedly able to reproduce reality due to the limited range of operation thereof, such that it cannot cover real situations.

Korean Patent Unexamined Publication No. 10-2013-0053574 discloses a simulation system relating to vehicle driving, and, in detail, the simulation system includes a manipulation device for vehicle traveling, ahead-up display placed in the line of the main field of vision of a driver and configured to display a simulation mode selected from a plurality of predetermined simulation modes and a result of execution of the corresponding simulation mode, and a simulator controller configured to determine whether or not the simulation system is operable and to control the corresponding simulation mode displayed on the head-up display in connection with the manipulation device, so that the driver may virtually drive the vehicle in a situation as if the driver were actually driving the vehicle and check the operation capability of the driver or the condition of the driver prior to actual driving or prevent an accident in advance.

However, this technology shows a simulation merely using a visual situation through the head-up display, and does not allow the driver to sense a real situation through the driver's body, thus failing to convey a realistic sensation.

Korean Patent Registration No. 10-1429104 discloses a supporting device of a chair for virtual reality bodily sensation, and, in detail, the supporting device includes a chair 100 having a seat part 101 on which a user may sit and a back part 102 configured to support the upper body of the user; a plurality of support stands 130 rotatably installed on both side surfaces and the center of the rear surface of the seat part 101 by connection pins 120; a screw shaft 151 screw-coupled to the end of each of the support stands 130; a drive motor 150 connected to the end of the screw shaft 151 so as to rotate the screw shaft 151 and installed in a motor bracket 160; a base 190 configured such that the motor brackets 160 are installed thereon and having a through hole 191 formed in the center thereof; a rotary shaft 196 installed on the bottom surface of the base 190 so as to rotate the base 190; and a connection link 140 installed between the middle portion of the support stand 130 installed on one side surface of the seat part 101 and an extension bar 170 extending from a motor bracket 160 of the support stand installed on the other surface of the seat part 101 so as to be rotatable about a first rotational hinge 180 and a second rotational hinge 181.

However, the device disclosed in Korean Patent No. 10-1429104 requires complicated elements, such as a plurality of motors, universal joints and screw shafts in order to enable the chairto movein threedimensions, and also requires a complicated program to manipulate the device, thus reducing productivity and incurring a high price burden, and moreover, the chair, which is supported along threeaxes, is unstable, and the overall operation of the device insufficiently conveys a sense of realism.

### [Disclosure]

### [Technical Problem]

Therefore, the present invention has been made in view of the above problems, and it is an object of the present invention to provide a virtual simulation device which may provide a stable and excellent sense of realism according to a programmed situation.

It is another object of the present invention to provide a virtual simulation device which may reproduce realistic motions and have a simplified configuration so as to improve program-connected productivity and to achieve cost reduction.

It is yet another object of the present invention to provide a virtual simulation device which may be applied to a virtual reality device for various games or education and be easily integrated with an additional device so as to have excellent expandability.

### [Technical Solution]

In accordance with an aspect of the present invention, the above and other objects can be accomplished by the provision ofavirtual simulation device, including a base; an upper frame spaced apart upwards from the base by an interval so as to be opposite the base; front and rear support frames disposed opposite each other at forward and rearward positions and provided with both ends rotatably hinge-assembled with the base and the upper frame; a forward and rearward oscillating unit connected to one selected from the front and rear support frames and configured to oscillate the front and rear support frames forwards and rearwards; a seat plate configured such that a chair is mounted on an upper side thereof, and installed on an upper side of the upper frame so as to be rotatable about a rotary shaft; a leftward and rightward rotating unit connected to one side of the seat plate and configured to rotate the seat plate left and right; and a display configured to visually display a virtual space based on an input program.

Each of the forward and rearward oscillating unit and the leftward and rightward rotating unit may include an actuator operated by a motor or a hydraulic cylinder, or include a link configured to convert rotary motion of a cam rotated by a motor into rectilinear motion.

Aring bolt may be assembled with each of both ends of the link so that a length of the link is adjustable.

The front support frame may be installed such that an upper end thereof is tilted rearwards, the rear support frame may be installed such that an upper end thereof is tilted forwards, and thus, the front support frame, the rear support frame, the base located thereunder, and the upper frame located thereon may form a generally trapezoidal side surface.

Rollers configured to reduce friction between the seat plate and the upper frame while supporting the seat plate with respect to the upper frame when the seat plate is rotated about the rotary shaft may be installed at a lower region of a rear portion of the seat plate.

The rollers may include upper rollers and lower rollers supported by roller brackets installed at a lower end of the rear portion of the seat plate, the upper rollers may come into contact with an upper surface of a rear end of the upper frame so as to be supported thereby, and the lower rollers may come into contact with a lower surface of the rear end of the upper frame so as to be supported thereby, thereby being capable of realizing the stable rotary motion of the chair while maintaining the uniform assembled state of the chair.

Amanipulator connected to the input program via a circuit may be disposed in front of the chair and is connected to the seat plate so as to be operated integrally with the seat plate and the chair.

The manipulator may include a steering handle and accelerator and brake pedals.

Ablower configured to blow air towards the chair may be installed around the chair.

The display may be an LCD or LED monitor, or be a head mounted display (HMD) used in a virtual reality device.

When a situation of virtual simulation visually displayed from the input program is a stop situation, the front and rear support frames may be pulled rearwards by the forward and rearward oscillating unit so that the chair is tilted forwards, and when the situation of virtual simulation visually displayed from the input program is an acceleration situation, the front and rear support frames may be pulled forwards by the forward and rearward oscillating unit so that the chair is tilted rearwards, thereby allowing a user to experience a sense of realism due to inertia caused by real stoppage and acceleration of a vehicle.

In accordance with another aspect of the present invention, there is provided a virtual simulation device, including a base configured such that a forward and rearward oscillating cam motor is installed on an upper surface thereof;an upper frame configured such that a leftward and rightward rotating cam motor is installed on a lower surface thereof, and spaced apart from the base by an interval so as to be opposite the base; front and rear support frames disposed opposite each other at forward and rearward positions and provided with both ends rotatably hinge-assembled with the base and the upper frame;a forward and rearward oscillating link configured to have one end connected to a forward and rearward oscillating cam of the forward and rearward oscillating cam motor and a remaining end rotatably connected to any one selected from the front and rear support frames; a seat plate configured such that a chair is mounted on an upper side thereof, and installed on an upper side of the upper frame so as to be rotatable about a rotary shaft;a leftward and rightward rotating link configured to have one end connected to a leftward and rightward rotating cam of the leftward and rightward rotating cam motor and a remaining end connected to one side of the seat plate; and a display configured to visually display a virtual space based on an input program.

In accordance with a further aspect of the present invention, there is provided a virtual simulation device, including a base configured such that a forward and rearward oscillating cam motor is installed on an upper surface thereof;an upper frame configured such that a leftward and rightward rotating cam motor is installed on a lower surface thereof, and spaced apart from the base by an interval so as to be opposite the base; front and rear support frames disposed opposite each other at forward and rearward positions and provided with both ends rotatably hinge-assembled with the base and the upper frame;a forward and rearward oscillating link configured to have one end connected to a forward and rearward oscillating cam of the forward and rearward oscillating cam motor and a remaining end rotatably connected to any one selected from the front and rear support frames; a seat plate configured such that a chair is mounted on an upper side thereof, assembled with the upper frame by a rotary shaft protruding from one end of the seat plate, and installed so as to be rotatable about the rotary shaft;a leftward and rightward rotating link configured to have one end connected to a leftward and rightward rotating cam of the leftward and rightward rotating cam motor and a remaining end connected to one side of the seat plate; a display configured to visually display a virtual space based on an input program; and a manipulator including a steering handle and accelerator and brake pedals, installed in front of the chair, and connected to the input program via a circuit so as to be operated integrally with the chair, wherein the chair and the manipulator are rotated by operation of the leftward and rightward rotating link by the leftward and rightward rotating cam motor according to rotation of the steering handle, when the brake pedal is pressed, the front and rear support frames are pulled rearwards by operation of the forward and rearward oscillating link by the forward and rearward oscillating cam motor so that the chair is tilted forwards, and when the accelerator pedal is pressed, the front and rear support frames are pulled forwards by the operation of the forward and rearward oscillating link by the forward and rearward oscillating cam motor so that the chair is tilted rearwards.

### [Advantageous effects]

The above-described virtual simulation device according to the present invention provides movements similar to a real situation while oscillating the chair forwards and rearwards and rotating the chair left and right through a forward and rearward oscillating unit and a leftward and rightward rotating unit by operating an input program and a manipulator, thereby allowing a user to feel a more perfect sense of reality.

The virtual simulation device according to the present invention may realize more realistic movement of the chair, reduce manufacturing costs due to the stable and simplified configuration thereof, improve productivity, and realize stable simulation motions.

### [Description of Drawings]

FIG. 1 is a perspective view illustrating a simulation device according to one embodiment of the present invention.
FIG. 2 is a rear perspective view of FIG. 1.
FIG. 3 is a rear bottom perspective view of FIG. 1.
FIG. 4 is a side view of FIG. 1.
FIG. 5 is a partially cross-sectional view of FIG. 4.
FIG. 6 is a bottom perspective view of the simulation device according to the present invention, from which front and rear support frames are removed.
FIG. 7 is a side view illustrating the forward and rearward operating state of the simulation device according to the present invention.
FIG. 8 is a view schematically illustrating the forward and rearward operating state of the simulation device according to the present invention.
FIG. 9 is a rear view illustrating the left ward and rightward operating state of the simulation device according to the present invention.
FIG. 10 is a plan view illustrating the leftward and rightward operating state of the simulation device according to the present invention.

### [Best Mode]

Hereinafter, reference will now be made in detail to exemplary embodiments of the present invention, examples of which are illustrated in the accompanying drawings.

The terms used in the following description are defined in consideration of the functions thereof obtained according to the present invention and the definitions of these terms may be changed in accordance with the intention of a user or an operator or a usual practice. Therefore, the definitions of these terms should be determined based on the whole content of this specification.

In the drawings, the same or similar elements are denoted by the same reference numerals even though they are depicted in different drawings.

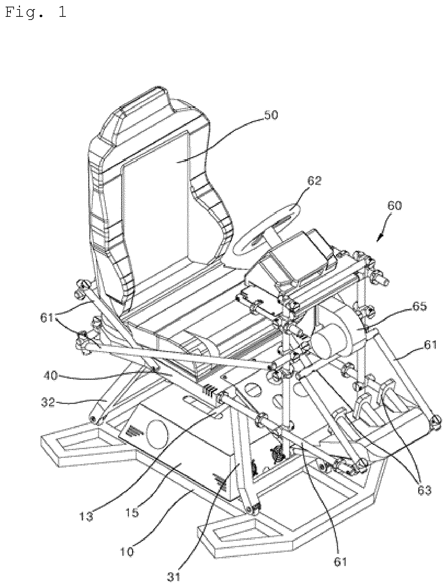

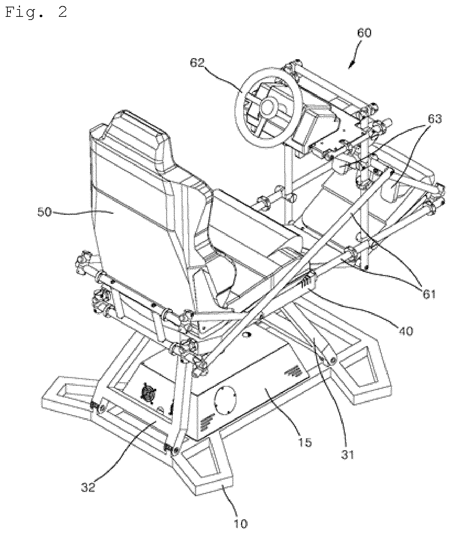

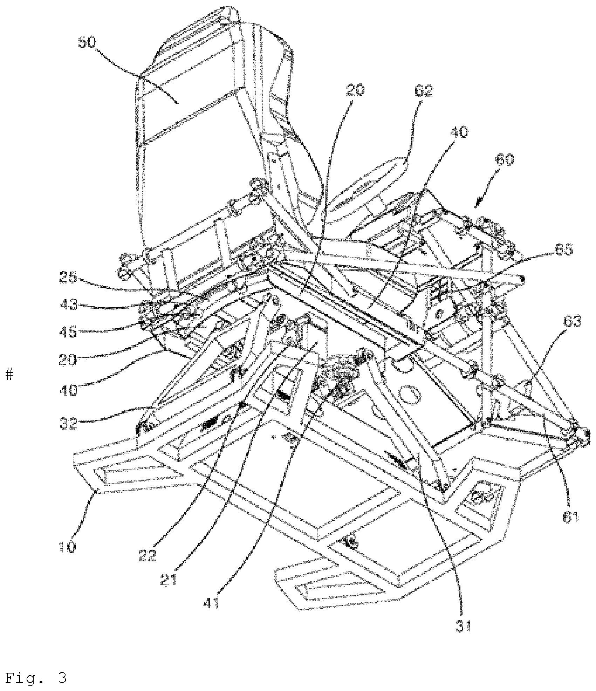

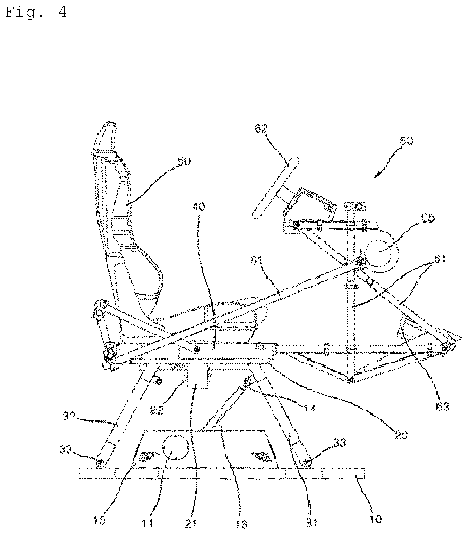

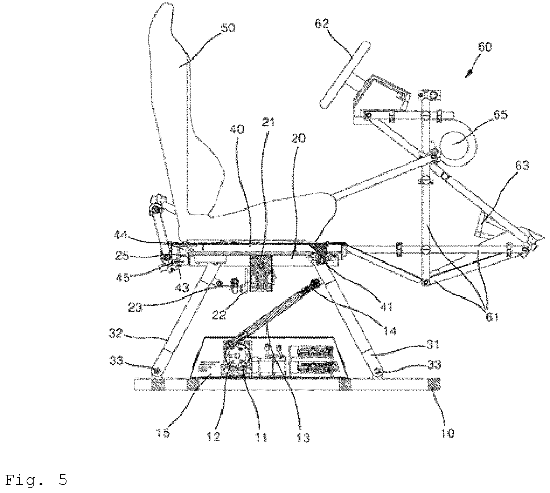

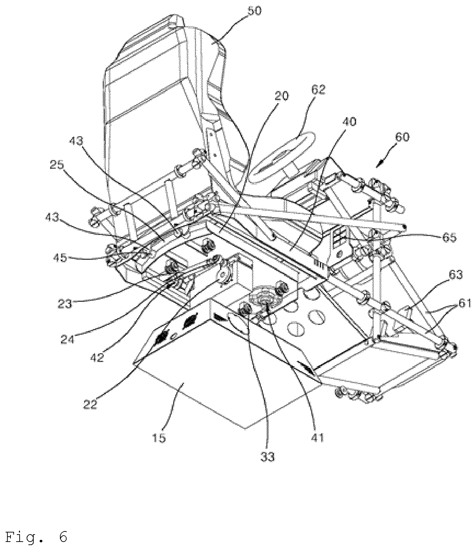

FIG. 1 is a perspective view illustrating a simulation device according to one embodiment of the present invention, FIG. 2 is a rear perspective view of FIG. 1, FIG. 3 is a rear bottom perspective view of FIG. 1, FIG. 4 is a side view of FIG. 1, FIG. 5 is a partially cross-sectional view of FIG. 4, and FIG. 6 is a bottom perspective view of the simulation device according to the present invention, from which front and rear support frames are removed, and referring to these figures, the simulation device according to the present invention includes a base 10, an upper frame 20 spaced apart from the base 10 so as to be opposite the base 10, front and rear support frames 31 and 32 configured to connect the base 10 and the upper frame 20, a seat plate 40 installed on the upper side of the upper frame 20, and a chair 50 mounted on the upper side of the seat plate 40.

The base 10 supports the entirety of the simulation device, and the lower ends of the front support frame 31 and the rear support frame 32 are assembled with the upper surface of the base 10 by hinges 33 so as to be rotatable forwards and rearwards.

The upper frame 20 is spaced apart upwards from the base 10 by a designated interval so as to be opposite the base 10, and the upper ends of the front support frame 31 and the rear support frame 32 are assembled with the upper frame 20 by hinges 33 so as to be rotatable forwards and rearwards.

Therefore, the upper frame 20 is supported by the front support frame 31 and the rear support frame 32, and the lower ends and the upper ends of the front support frame 31 and the rear support frame 32 having a trapezoidal shape are connected to the base 10 and the upper frame 20 so as to support the base 10 and the upper frame 20.

Further, as shown in FIG. 4, the front support frame 31 is installed such that the upper end thereof is tilted rearwards, the rear support frame 32 is installed such that the upper end thereof is tilted forwards, and thus, the front support frame 31, the rear support frame 32, the base 10 located thereunder, and the upper frame 20 located thereon form a generally trapezoidal side surface.

The chair is fixedly mounted on the upper side of the seat plate 40 installed on the upper side of the upper frame 20, a rotary shaft 41 protrudes downwards from one end of the seat plate 40 and is rotatably assembled with one end of the upper frame 20, and thus, the seat plate 40 including the chair 50 is installed so as to be rotatable about the rotary shaft 41.

Here, the rotary shaft 41 may be prepared as a part which is provided separately from the seat plate 40 and is then assembled with the seat plate 40, or may be formed integrally with the seat plate 40.

The chair 50 according to the present invention may be oscillated forwards and rearwards by a forward and rearward oscillating unit so that the tilt of the chair 50 may be changed, and be rotated left and right by a leftward and rightward rotating unit so that a three-dimensional effect is provided, and for this purpose, a forward and rearward oscillating cam motor 11 is installed in a distribution box 15 on the upper surface of the base 10, a forward and rearward oscillating cam 12 is installed on a motor shaft of the forward and rearward oscillating cam motor 11, and one end of a forward and rearward oscillating link 13 is connected to the forward and rearward oscillating cam 12.

The other end of the forward and rearward oscillating link 13 is connected to one upper end of the front support frame 31 or the rear support frame 32 and, in the drawings, the other end of the forward and rearward oscillating link 13 is connected to the upper end of the front support frame 31.

Both ends of the forward and rearward oscillating link 13 are rotatably connected to the corresponding elements, and a ring bolt 14 is assembled with each of the ends so that the length of the forward and rearward oscillating link 13 is adjustable.

The forward and rearward oscillating link 13 pulls or pushes the front support frame 31 forwards or backwards by the rotating section of the forward and rearward oscillating cam 12 and thus drives the chair 50 forwards or rearwards, when the forward and rearward oscillating cam 12 is rotated due to the operation of the motor.

Further, a leftward and rightward rotating cam motor 21 is installed on the base surface of the upper frame 20, the leftward and rightward rotating cam motor 21 is covered by a motor case, a leftward and rightward rotating cam 22 is mounted on a motor shaft protruding from the leftward and rightward rotating cam motor 21, and one end of a leftward and rightward rotating link 23 is connected to the leftward and rightward rotating cam 22.

The other end of the leftward and rightward rotating link 23 is connected to one side of the seat plate 40, and thereby, when the leftward and rightward rotating cam 22 is rotated due to the operation of the motor, the leftward and rightward rotating link 23 rotates the seat plate 40 about the rotary shaft 41 by the rotating section of the leftward and rightward rotating cam 22.

Also, both ends of the leftward and rightward rotating link 23 are rotatably connected to the corresponding elements, and a ring bolt 24 is assembled with each of the ends so that the length of the leftward and rightward rotating link 23 is adjustable.

In order to connect the leftward and rightward rotating link 23 to the seat plate 40, a connection shaft 42 is installed at one side of the seat plate 40, and the end of the leftward and rightward rotating link 23 is rotatably connected to the connection shaft 42.

The seat plate 40 is configured to be rotated leftwards and rightwards by a designated section about the rotary shaft 41 by the leftward and rightward rotating link 23, and the rotary shaft 41 may be located at the front region of the seat plate 40.

That is, because the center of gravity of the seat plate 40 is located at the front portion thereof due to rotation of a manipulator installed in front of the chair together with rotation of the chair 50 when the seat plate 40 is rotated, the seat plate 40 may maintain the center of rotation thereof, and the user sitting on the chair is located in the rear of the center of rotation thereof and may thus feel more realistic movement due to centrifugal force caused by rotation.

Here, rollers are installed at the rear portion of the seat plate 40 in order to support the rear portion of the seat plate 40 and toallow the seat plate 40 to be smoothly rotated.

Roller brackets 43 are installed at the lower end of the rear portion of the seat plate 40, upper rollers 44 and lower rollers 45 are installed at upper and lower portions of the roller brackets 43, a plate-shaped support 25 is installed at the rear end of the upper frame 20 so as to be interposed between the upper rollers 44 and the lower rollers 45.

Therefore, the seat plate 40 is supported by the upper frame 20 at two points, i.e., the rotary shaft 41 and the upper and lower rollers 45, and, because the rear support 25 of the upper frame 20 is coupled between the upper rollers 44 and the lower rollers 45, when the seat plate 40 is rotated within a restricted section on the upper frame 20, stable rotation of the seat plate 40 may be induced due to rolling contact between the rollers while preventing separation of the rear portion of the seat plate 40.

Two or more upper rollers 44 and lower rollers 45 may be installed, and may be installed alternately.

Actuators operated by motors, hydraulic cylinders or the like may be applied as units, which oscillate the chair 50 forwards or rearwards and rotate the chair 50 left or right, in the present invention, instead of the links.

In the simulation device according to the present invention, a manipulator 60 which allows a user to manipulate the simulation content may be installed in front of the chair 50, as shown in the figures, and in this case, the manipulator 60 is fixedly connected to the chair 50 or the seat plate 40 so as to be movable together with the chair 50, and a plurality of support stands 61 is installed at the seat plate 40 so as to connect the manipulator 60 to the seat plate 40 and to support the manipulator 60 in these figures.

The support stands 61 are configured to be connected horizontally and vertically in the figures, and such a connecting configuration of the manipulator 60 may be arbitrarily changed depending on a position where the manipulator 60 is desired to be installed or a target object of simulation.

Further, the manipulator 60 includes a steering handle 62 and pedals 63 for manipulation such as acceleration or brake, these manipulation units are provided in consideration of driving of a general vehicle, and the elements of the manipulator 60 may be changed depending on a target object of simulation.

Further, a display (not shown) configured to visually display a virtual space may be further installed in the simulation device according to the present invention, and the display may include an LCD or LED monitor installed on the manipulator or include a head mounted display (HMD) for virtual reality experience.

The content of the display may vary depending on an input program, and the program, the respective elements of the manipulator 60, the forward and rearward oscillating cam motor 11 and the leftward and rightward rotating cam motor 21 are connected via a circuit.

Particularly, the steering handle 62 of the manipulator 60 operates the leftward and rightward rotating cam motor 21 so as to rotate the chair left or right, and the accelerator and brake pedals 63 function to operate the forward and rearward oscillating cam motor 11 so as to oscillate the chair forwards or rearwards.

A blower 65 is installed in front of the chair 50 in the simulation device according to the present invention, and blows air based on an input program so as to provide a sensation close to a real situation, and the blower 65 is installed at one end of the manipulator 60.

A plurality of blowers 65 may be installed, and the direction of air may be arbitrarily adjusted by varying the installation direction of the blowers 65.

Hereinafter, the functions of the present invention having the above-described configuration will be described.

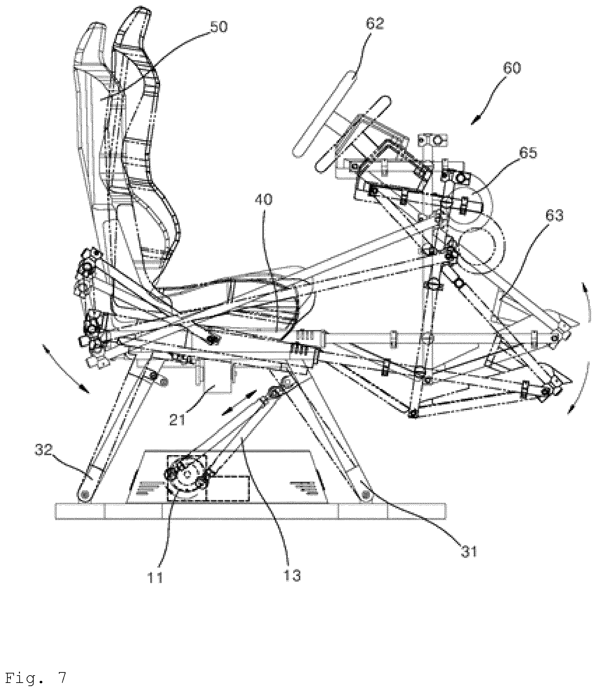

FIG. 7 is a side view illustrating theforward and rearward operating state of the simulation device according to the present invention, and as shown in this figure, when the forward and rearward oscillating cam 12 is rotated by driving the forward and rearward oscillating cam motor 11, the rotary motion of the cam is converted into rectilinear motion by the forward and rearward oscillating link 13, the front support frame 31 is pulled or pushed so that the front support frame 31 and the rear support frame 32 are tilted forwards or rearwards, and consequently, the upper frame 20, the seat plate 40 and the chair 50 together with the manipulator 60 are tilted forwards or rearwards.

It is not necessary to excessively rotate the forward and rearward oscillating cam 12 in order to realize a tilt in the forward or rearward direction, a sufficient tilt may be realized through rotation in a short section, and the magnitude of the tilt may vary depending on the input program and manipulation of the accelerator and brake pedals 63 of the manipulator 60.

That is, the degree of tilting of the chair varies by varying the rotating section of the forward and rearward oscillating cam 12 depending on the degree of depression of the accelerator pedal and the brake pedal.

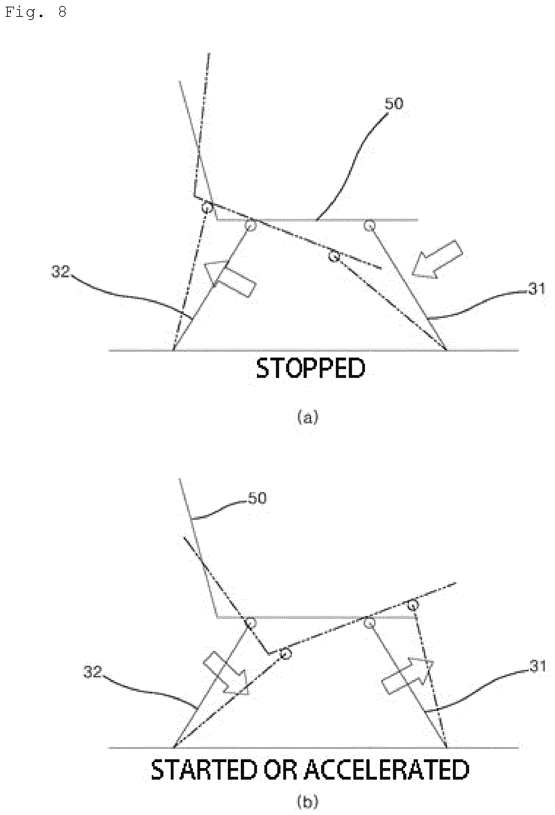

FIG. 8 is a view schematically illustrating the forward and rearward oscillating relationship in the simulation device according to the present invention, more particularly showing a tilt direction of the chair in the stopped state and a tilt direction of the chair in the accelerated state.

First, the front support frame 31 according to the present invention is installed so as to be tilted rearwards, the rear support frame 32 is installed so as to be tilted forwards, and thus, they generally assume a trapezoidal shape in the state in which the chair remains level.

In this state, when the brake pedal of the manipulator 60 is pressed, the forward and rearward oscillating link 13 pulls the front support frame 31 rearwards due to driving of the forward and rearward oscillating cam motor 11 and the forward and rearward oscillating cam 12, and thereby, the front support frame 31 in the rearward direction is tilted more increased, whereas, in contrast, the rear support frame 32 is erected in the vertical direction, the front portion of the chair 50 is lowered, the rear portion of the chair 50 is raised, and consequently, the user's body sitting on the chair 50 leans forwards.

A phenomenon, in which, when a user presses a brake pedal, the user's body leans forwards due to inertia, is reflected in such a motion, and the effect felt by the user may be maximized by setting a different degree of tilting depending on the degree of depression of the brake pedal.

Further, when the accelerator pedal is pressed, contrary to the brake pedal, the forward and rearward oscillating link 13 pushes the front support frame 31 forward, and thereby, the front support frame 31 is erected in the vertical direction and the rear support frame 32 is tilted further forwards, the front portion of the chair 50 is raised, the rear portion of the chair 50 is lowered, and consequently, the user's body sitting on the chair 50 leans rearwards.

Therefore, the user may feel as if the user's body actually leans rearwards during starting or accelerating a vehicle, and the realistic effect felt by the user may be maximized by setting a different degree of tilting depending on the degree of depression of the accelerator pedal.

Such forward and rearward oscillating motions of the chair 50 may be further maximized by the trapezoidal installed state of the front support frame 31 and rear support frame 32.

That is, the lowered support frame is lowered further and the erected support frame is erected higher, and thus, a sufficient tilt may be realized through the operation of the forward and rearward oscillating cam 12 or the forward and rearward oscillating link 13 within a comparatively short section.

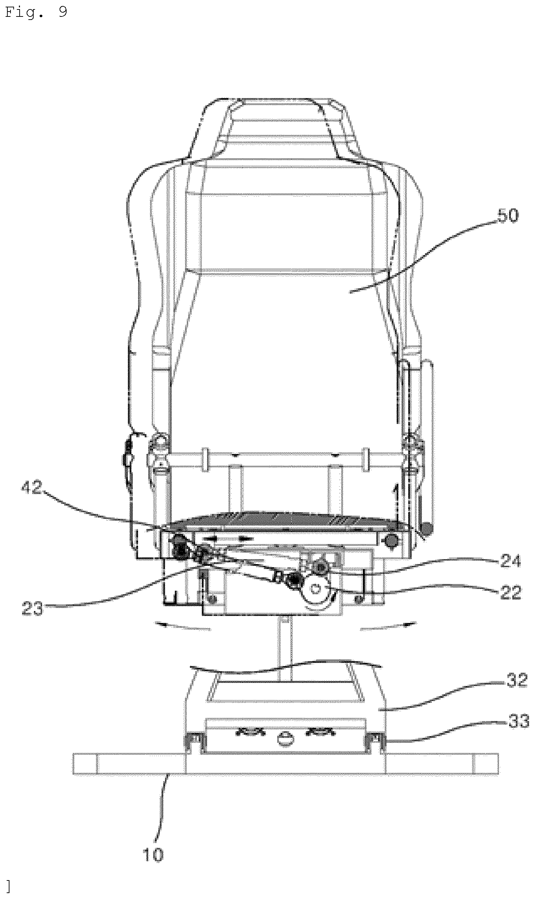

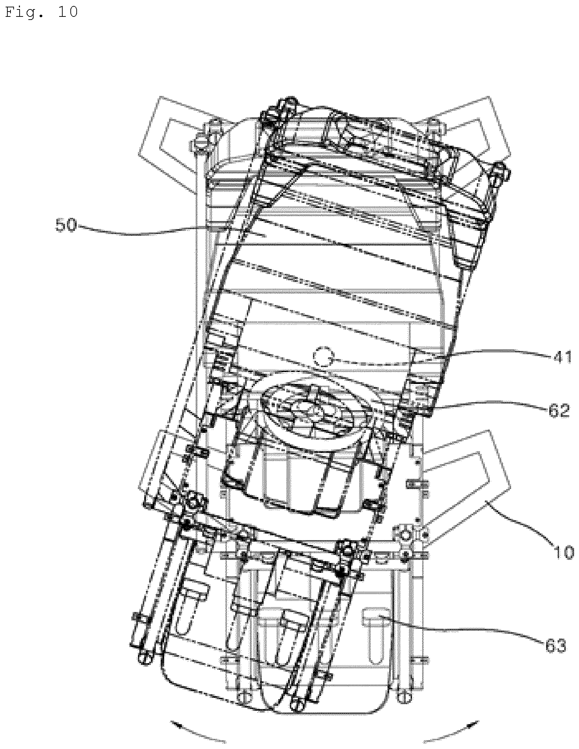

FIGs. 9 and 10 are rear and plan views illustrating the leftward and rightwardrotary motions of the simulation device according to the present invention, which are operated through an input program or by rotation of the steering handle 62 of the manipulator 60.

By rotating the steering handle 62 left or right, the leftward and rightward rotating cam motor 211 is driven and thus rotates the leftward and rightward rotating cam 22, the rotary motion of the leftward and rightward rotating cam 22 is converted into rectilinear motion by the leftward and rightward rotating link 23 connected to the leftward and rightward rotating cam 22, the connection shaft 42 located at one side of the seat plate 40 is pulled or pushed,and thereby, the seat plate 40 including the chair 50 is rotated about the rotary shaft 41.

That is, the seat plate 40, the chair 50 and the manipulator 60 located on the upper side of the upper frame 20 are rotated left and right, the rotary shaft 41 is located at the front portion of the chair, the leftward and rightward rotating link 23 is located at the rear portion of the chair, and thereby, rotation sufficient to be felt by the user may be performed even by the operation of the leftward and rightward rotating cam 22 and the leftward and rightward rotating link 23 within a comparatively short section.

In such rotary motion, the chair 50 and the manipulator 60 are supported about the rotary shaft 41, a load is applied to the rear portion of the chair 50 due to centrifugal force caused by the rotation, and the upper rollers 44 and the lower rollers 45 bear the load.

The horizontal state of the seat plate 40 is stably maintained because the upper rollers 44 and the lower rollers 45 come into contact with the upper surface and the lower surface of the rear support 25 of the upper frame 20 so as to support the rear support 25, and the smooth rotation of the chair is induced while friction caused by the rotation is minimized because the upper rollers 44 and the lower rollers 45 come into rolling contact with the support 25 when the seat plate 40 is rotated.

The present invention virtually displays simulation content and thus enables a visual phenomenon displayed in a virtual space to be felt as a real situation in connection with frontward and rearward oscillation and leftward and rightward rotation of the chair according to the present invention, and the display of such content may be realized by an LCD or LED monitor installed in front of the chair 50, or an HMD for virtual reality experience.

Therefore, the forward and rearward movement and the leftward and rightward movement of the chair are combinedly performed in connection with the situation of a character according to the content of an input program so that the user may experience three-dimensional movement, and the user may feel a real sense of speed through wind supplied from the blower 65 installed around the chair 50, i.e., feel a three-dimensional sense of reality.

The forward and rearward oscillating cam motor 11 and the leftward and rightward rotating cam motor 21 according to the present invention may be driven by directly operating the manipulator 60, or be automatically driven based on the content of an input program.

The present invention may be applied to various simulation experiences, such as education or practice, and various game consoles, and be applied to a wide variety of fields through a comparatively simple configuration.

Further, an additional unit configured to provide the left or right tilt of the chair may be mounted in the present invention, thus being capable of providing sufficient expandability of three-dimensional simulation.

The present invention as described above is not limited by the embodiments described herein and accompanying drawings. It should be apparent to those skilled in the art that various substitutions, changes and modifications which are not exemplified herein but are still within the spirit and scope of the present invention may be made.

Further, a detailed description of mechanical elements which may be fundamentally and arbitrarily used, for example, universal elements, such as a safety belt installed on the chair, a reducer used in the motor, a bearing used in the hinge, a clamp configured to connect the support stands, etc., is omitted in the present invention.

### [Industrial Applicability]

A virtual simulation device according to the present invention is formed by hinge-connecting a base and an upper frame using a front support frame and a rear support frame so as to realize a generally trapezoidal shape, mounting a seat plate rotated about a rotary shaft on the upper side of the upper frame, mounting a chair on the upper side of the seat plate, mounting aforward and rearward oscillating cam motor and a forward and rearward oscillating link for oscillating the front and rear support frames forward and rearward on the base, and mounting a leftward and rightward rotating cam motor and a leftward and rightward rotating link for rotating the seat plate on the upper frame.

The virtual simulation device according to the present invention provides movements similar to a real situations while oscillating the chair forwards and rearwards and rotating the chair left and right through a forward and rearward oscillating unit and a leftward and rightward rotating unit by operating an input program and a manipulator, thereby allowing a user to feel a more perfect sense of reality.

Particularly, the virtual simulation device according to the present invention may reduce manufacturing costs due to the stable and simplified configuration thereof, improve productivity, and realize stable simulation motions, thereby being applicable to various simulation experiences, such as education or practice, and various game consoles, and being applicable to a wide variety of fields through the comparatively simple configuration thereof.

## Claims

1. Avirtual simulation device, comprising:
a base;
an upper frame spaced apart upwards from the base by an interval so as to be opposite the base;
front and rear support frames disposed opposite each other at forward and rearwardpositions and provided with both ends rotatably hinge-assembled with the base and the upper frame;
aforward and rearward oscillating unit connected to one selected from the front and rear support frames and configured to oscillate the front and rear support frames forwards and rearwards;
a seat plate configured such that a chair is mounted on an upper side thereof, and installed on an upper side of the upper frame so as to be rotatable about a rotary shaft;
aleftward and rightward rotating unit connected to one side of the seat plate and configured to rotate the seat plate left and right; and
a display configured to visually display a virtual space based on an input program.

2. The virtual simulation device according to claim 1, wherein the front support frame is installed such that an upper end thereof is tilted rearwards, the rear support frame is installed such that an upper end thereof is tilted forwards, and thus, the front support frame, the rear support frame, the base located thereunder, and the upper frame located thereon form a generally trapezoidal side surface.

3. The virtual simulation device according to claim 1, wherein each of the forward and rearward oscillating unit and the leftward and rightward rotating unit comprisesan actuator operated by a motor.

4. The virtual simulation device according to claim 1, wherein each of the forward and rearward oscillating unit and the leftward and rightward rotating unit comprises a link configured to convert rotary motion of a cam rotated by a motor into rectilinear motion.

5. The virtual simulation device according to claim 4, wherein a ring bolt is assembled with each of both ends of the link so that a length of the link is adjustable.

6. The virtual simulation device according to claim 1, wherein rollers configured to reduce friction between the seat plate and the upper frame while supporting the seat plate with respect to the upper frame when the seat plate is rotated about the rotary shaft are installed at a lower region of a rear portion of the seat plate.

7. The virtual simulation device according to claim 6, wherein the rollers comprise upper rollers and lower rollers supported by roller brackets installed at a lower end of the rear portion of the seat plate, the upper rollers come into contact with an upper surface of a rear end of the upper frame so as to be supported thereby, and the lower rollers come into contact with a lower surface of the rear end of the upper frame so as to be supported thereby.

8. The virtual simulation device according to claim 1, wherein a manipulator connected to the input program via a circuit is disposed in front of the chair and is connected to the seat plate so as to be operated integrally with the seat plate and the chair.

9. The virtual simulation device according to claim 8, wherein the manipulator comprises a steering handle and accelerator and brake pedals.

10. The virtual simulation device according to claim 1, wherein a blower configured to blow air towards the chair is installed around the chair.

11. The virtual simulation device according to claim 1, wherein the display is an LCD or LED monitor.

12. The virtual simulation device according to claim 1, wherein the display is a head mounted display (HMD).

13. The virtual simulation device according to claim 1, wherein, when a situation of virtual simulation visually displayed from the input program is a stop situation, the front and rear support frames are pulled rearwards by the forward and rearward oscillating unit so that the chair is tilted forwards, and when the situation of virtual simulation visually displayed from the input program is an acceleration situation, the front and rear support frames are pulled forwards by the forward and rearward oscillating unit so that the chair is tilted rearwards.

14. A virtual simulation device, comprising:
a base configured such that a forward and rearward oscillating cam motor is installed on an upper surface thereof;
an upper frame configured such that a leftward and rightward rotating cam motor is installed on a lower surface thereof, and spaced apart from the base by an interval so as to be opposite the base;
front and rear support frames disposed opposite each other at forward and rearward positions and provided with both ends rotatably hinge-assembled with the base and the upper frame;
aforward and rearward oscillatinglink configured to have one end connected to a forward and rearward oscillating cam of the forward and rearward oscillating cam motor and a remaining end rotatably connected to any one selected from the front and rear support frames;
a seat plate configured such that a chair is mounted on an upper side thereof, and installed on an upper side of the upper frame so as to be rotatable about a rotary shaft;
aleftward and rightward rotating link configured to have one end connected to a leftward and rightward rotating cam of the leftward and rightward rotating cam motor and a remaining end connected to one side of the seat plate; and
a display configured to visually display a virtual space based on an input program.

15. A virtual simulation device, comprising:
a base configured such that a forward and rearward oscillating cam motor is installed on an upper surface thereof;
an upper frame configured such that a leftward and rightward rotating cam motor is installed on a lower surface thereof, and spaced apart from the base by an interval so as to be opposite the base;
front and rear support frames disposed opposite each other at forward and rearward positions and provided with both ends rotatably hinge-assembled with the base and the upper frame;
aforward and rearward oscillating link configured to have one end connected to a forward and rearward oscillating cam of the forward and rearward oscillating cam motor and a remaining end rotatably connected to any one selected from the front and rear support frames;
a seat plate configured such that a chair is mounted on an upper side thereof, assembled with the upper frame by a rotary shaft protruding from one end of the seat plate, and installed so as to be rotatable about the rotary shaft;
aleftward and rightward rotating link configured to have one end connected to a leftward and rightward rotating cam of the leftward and rightward rotating cam motor and a remaining end connected to one side of the seat plate;
a display configured to visually display a virtual space based on an input program; and
a manipulator comprising a steering handle and accelerator and brake pedals, installed in front of the chair, and connected to the input program via a circuit so as to be operated integrally with the chair,
wherein the chair and the manipulator are rotated by operation of the leftward and rightward rotating link by the leftward and rightward rotating cam motor according to rotation of the steering handle, when the brake pedal is pressed, the front and rear support frames are pulled rearwards by operation of the forward and rearward oscillating link by the forward and rearward oscillating cam motor so that the chair is tilted forwards, and when the accelerator pedal is pressed, the front and rear support frames are pulled forwards by the operation of the forward and rearward oscillating link by the forward and rearward oscillatingcam motor so that the chair is tilted rearwards.
